# EUROPÄISCHE PATENTANMELDUNG

(11) **EP 2 208 767 A2**
(43) Veröffentlichungstag der Anmeldung: **21.07.2010**
(21) Anmeldenummer: 10150288.8
(22) Anmeldetag: 08.01.2010
(51) Int. Cl.: C09G 1/02, C09K 3/14, C22B 34/12

(54) **Verfahren zum Polieren mit Hilfe titanhaltiger Poliermittel**

(30) Priorität: 12.01.2009 DE 102009004672
(71) Anmelder: crenox GmbH, 47829 Krefeld (DE)
(72) Erfinder: Auer, Gerhard, Dr., 47800 Krefeld (DE)
(74) Vertreter: Viering, Jentschura & Partner

(57) **Zusammenfassung**

Für ein Verfahren zum Polieren oder Schleifen von Werkstoffen oder Werkstücken mit Hilfe eines Abrasivmaterials soll eine Lösung geschaffen werden, mit welcher ein wirkungsvolles und kostengünstiges Abrasivmittel bereitgestellt wird, welches in großen Mengen in konstanter Qualität verfügbar ist und das vorzugsweise nach seiner Verwendung beim Polieren und Schleifen ohne großen technischen Aufwand entsorgt werden kann. Dies wird dadurch erreicht, dass das Abrasivmaterial ein titanhaltiges Abrasivmittel enthält, welches bei der Titandioxidherstellung nach dem Sulfatverfahren als Zwischen- oder Nebenprodukt anfällt.

## Beschreibung

Die Erfindung richtet sich auf ein Verfahren zum Polieren oder Schleifen von Werkstoffen oder Werkstücken mit Hilfe eines Abrasivmaterials. Ebenso richtet sich die Erfindung auf ein Verfahren zur Herstellung eines Abrasivmaterials sowie ein Abrasivmaterial und dessen Verwendung.

Zahlreiche Werkstoffe wie z.B. Metalle, Glas, Stein, Holz oder Kunststoffe werden einem Polierverfahren unterzogen.
Meist erfolgt dies, weil der Werkstoffoberfläche ein gezieltes optisches Erscheinungsbild gegeben werden soll. Häufig soll die Oberfläche auf Grund der Glätte ein glänzendes Erscheinungsbild erhalten.

Beim Polieren nach dem Stand der Technik geschieht das Abtragen und Glätten der Oberfläche mit sehr feinen Poliermitteln, die meist in eine Paste oder Flüssigkeit eingebettet sind. Die Mittel werden dabei in einem Politurträger, etwa einer Tuch-, Filz-, Gummi, Pech- oder Lederscheibe, gebunden oder oberflächlich aufgebracht. Die Bearbeitung erfolgt bei Metall meist maschinell mit rotierenden Polierscheiben aus Stoff, Filz oder Leder. Auf die Scheibe wird die Poliersuspension aufgetragen. Die Poliersuspension besteht beispielsweise aus verschiedenen Fetten, Ölen und dem eigentlichen Poliermittel. Meist ist das Poliermittel Diamant, Aluminiumoxid, Ceroxid oder Chromtrioxid. Diese Poliermittel sind häufig teuer und aufwendig herzustellen. Auch Carbide, beispielsweise Titancarbid, können als Polier- oder als Schleifmittel eingesetzt werden. Diese Materialen sind jedoch ebenfalls sehr teuer.

Titandioxid oder titandioxidhaltige Verbindungen weisen im Gegensatz zu Titancarbiden eine wesentlich geringere Härte (nach Mohs ca. 5,5 für TiO₂) auf und werden deshalb bisher wenig als Poliermittel eingesetzt.

Aus der DE 10 2004 020 213 A1 und der DE 10 2004 020 230 A1 ist es bekannt, titanoxidhaltiges Material als Abrasivmaterial beim chemisch-mechanischen Polieren einzusetzen.

Nachfolgend wird unter Abrasivmaterial Material in Form von Feststoff, Pulver, Suspension, in Stückform o.ä. mit abrasiver Wirkung verstanden. Unter Abrasivmittel wird die eigentliche Wirksubstanz des Abrasivmaterials verstanden. Z.B. bildet TiO₂ als Abrasivmittel mit Wasser zusammen ein Abrasivmaterial in Form einer Suspension.

Der Herstellprozess von TiO₂ als titanoxidhaltiges Material nach dem Sulfatverfahren ist bekannt und in Industrial Inorganic Chemistry (Hrsg. G. Buxbaum, G. Pfaff, Wiley-VCH, Weinheim 2005) beschrieben und umfasst als erste Verfahrensschritte Erzmahlung, Aufschluss, Abtrennung des Feststoffes von der Aufschlusslösung (Schwarzlösung), Hydrolyse. Nach dem Schritt der Erzmahlung fällt der gemahlene Ilmenit oder die gemahlene Titanschlacke als Zwischenprodukt an.

Der Erfindung liegt die Aufgabe zugrunde, eine Lösung zu schaffen, die ein wirkungsvolles und kostengünstiges Abrasivmittel bereitstellt, welches in großen Mengen in konstanter Qualität verfügbar ist und das vorzugsweise nach seiner Verwendung beim Polieren und Schleifen ohne großen technischen Aufwand entsorgt werden kann.

Bei einem Verfahren der eingangs näher bezeichneten Art wird diese Aufgabe erfindungsgemäß dadurch gelöst, dass das Abrasivmittel ein titanhaltiges Material enthält, welches bei der Titandioxidherstellung nach dem Sulfatverfahren als Zwischen- oder Nebenprodukt anfällt. Dieser erste Aspekt der Erfindung besteht also darin, ein titanhaltiges, insbesondere titanoxidhaltiges Material als Abrasivmittel beim Polieren oder Schleifen von Werkstoffen oder Werkstücken zu verwenden.

Als titanhaltiges Abrasivmittel kann insbesondere gemahlener Ilmenit oder gemahlene Titanschlacke verwendet werden. Aufgrund der Abrasivität, der Feinteiligkeit und der großtechnischen Herstellung von meist über 100000 Tonnen pro Jahr in einer durchschnittlich großen Titandioxidfabrik ist der gemahlene Ilmenit oder die gemahlene Titanschlacke ein technisch und wirtschaftlich attraktives Abrasivmittel. Besonders günstig ist die Verwendung von Material, welches bei der Erzmahlung in den Staubfiltern abgeschieden wurde, weil dieses Material erstens besonders feinteilig ist und zweitens bei der Weiterverarbeitung im Pigmentproduktionsprozess nachteilige Wirkung haben kann.

Als titanhaltiges Abrasivmittel kann gemäß Weiterbildung der Erfindung auch Aufschlussrückstand, der bei der Herstellung von Titandioxid nach dem Sulfatverfahren als unlöslicher Rückstand anfällt und aus der sogenannten Schwarzlösung abgetrennt wird, verwendet werden. Der Aufschlussrückstand, der bei der Herstellung von Titandioxid nach dem Sulfatverfahren anfällt, entsteht auf die Weise, dass ein titanhaltiger Ausgangsrohstoff, insbesondere Ilmenit und/oder titanhaltige Schlacke, mit Schwefelsäure aufgeschlossen wird und aus der erhaltenen Aufschlusslösung durch Feststoffabtrennung, insbesondere Filtration, das Aufschlussrückstandsprodukt in Form einer Feststoff enthaltenden Masse erhalten wird.

In Ausgestaltung sieht die Erfindung vor, dass das Abrasivmittel zu mehr als 5 Gew.-%, bevorzugt zu mehr als 50 Gew.-%, besonders bevorzugt zu mehr als 90 Gew.-% aus Aufschlussrückstand aus der Titandioxidherstellung besteht. Hierbei bestehen sich alle vorstehenden Gew.-%-Angaben auf den Feststoffanteil.

Diese titanhaltigen Abrasivmittel haben eine mittlere Teilchengröße von 1 bis 60 Mikrometern, bevorzugt von 5 bis 40 Mikrometern und eine BET-Oberfläche von 1 bis 35 m²/g, bevorzugt von 5 bis 20 m²/g. Der TiO₂-Gehalt dieser Abrasivmittel beträgt typischerweise zwischen 30 und 80 Gew.-%, meist um 50 Gew.-% (+/- 10 Gew.-%).

Die Anforderungen an Abrasivmaterialien für das Schleifen oder Polieren, nämlich kostengünstige und in großen Mengen bei konstanter Qualität verfügbare Abrasivmittel, wird durch die erfindungsgemäßen Produkte in vollem Umfang erfüllt. Denn die TiO₂-Komponente bewirkt die abrasive Wirkung, während die Herkunft aus großtechnischen Prozessen die Verfügbarkeit in konstanter Qualität zu günstigen Kosten sicher stellt. Die in der erhaltenen feststoffhaltigen Masse befindlichen Feststoffpartikel weisen eine Härte auf, die ausreichend ist, um als Abrasivmaterial Verwendung zu finden.

Besonders vorteilhaft lässt sich das vorstehend näher beschriebene Abrasivmittel beim Schleifen oder Polieren von Glas oder Metall oder Stahl verwenden. Die Erfindung sieht daher in weiterer Ausgestaltung vor, dass der zu polierende Werkstoff Glas oder Metall, insbesondere Stahl, ist.

Die Herstellung des titanhaltigen Abrasivmittels erfolgt erfindungsgemäß dadurch, dass eine Neutralisation oder Teilneutralisation des sauren Aufschlussrückstandes, der bei der Herstellung von Titandioxid nach dem Sulfatverfahren anfällt, mit alkalischen Verbindungen, besonders bevorzugt mit Natronlauge, vorgenommen wird und dass dieser neutralisierte Aufschlussrückstand, bevorzugt durch Sprühtrocknung oder Spinflashtrocknung, zu granularem Abrasivmaterial verarbeitet wird. Bevorzugt weisen diese Granulate eine mittlere Partikelgröße von 10 bis 600 µm, vorzugsweise 30 bis 400 µm, insbesondere 50 bis 300 µm, auf.

Alternativ kann das titanhaltige Abrasivmittel in eine wässrige Suspension überführt werden und diese Suspension mit Hilfe eines organischen Additivs, bevorzugt eines Polyacrylates, stabilisiert werden. Bevorzugt werden dabei 0,01 Gew.-% bis Gew.-10%, besonders bevorzugt 0,5 Gew.-% bis 4 Gew.-%, an organischen Additiven bezogen auf den wasserunlöslichen Feststoff zugegeben. Dabei können bevorzugt Feststoffgehalte von 60 bis 75 Gew.-% erreicht werden.

Häufig stellt die Entsorgung der gebrauchten Abrasivmittel ein Problem dar. Die erfindungsgemäßen Abrasivmittel sind jedoch inert und können in der Regel (abhängig von den örtlichen Auflagen) ohne spezifische Behandlung in einfacher Weise entsorgt werden.

Wo dies nicht möglich ist bzw. wenn aus dem zu polierenden Material beim Schleifen oder Polieren Stoffe freigesetzt werden (wie z.B. Chrom), die einer einfachen Entsorgung entgegenstehen, kann das derart erhaltene Abrasivmaterial, das überwiegend aus TiO₂ und Eisenoxid besteht, vorzugsweise im Gemisch mit den beim Schneiden und Bearbeiten des jeweiligen Werkstückes entstandenen Abfallpartikeln aufgefangen und zur Entsorgung einem Schmelzofen, insbesondere einem Hochofen, zugeführt werden. Die hohen Temperaturen eines Schmelzofens zusammen mit den an einem Schmelzofen heutzutage befindlichen Abgasreinigungsvorrichtungen sorgen für eine umweltgerechte Entsorgung der Partikel. Hierbei sind die eisen- und titanhaltigen Partikel dieses Gemisches zudem Roh- oder Zuschlagsstoffe, die bei der Roheisenherstellung oder der Metallherstellung in Schmelzöfen Verwendung finden. Es ist also nicht mehr notwendig, das beim Schleifen oder Polieren entstehende Abfallgemisch (Schlamm) aufwendig zu entsorgen. Es kann kostengünstig als Zuschlagsstoff in einem Schmelzprozess einem Schmelzofen, insbesondere einem Hochofen, zugeführt werden. Es ist auch nicht notwendig, das Abrasivmaterial aus Kostengründen rückzugewinnen, da dieses preiswert ist oder als zu entsorgendes Abfallprodukt (Aufschlussrückstand) entsteht und mit einfachen Aufbereitungsschritten einer Verwendung als Abrasivmittel zugeführt werden kann. Das Abrasivmittel steht somit kostengünstig zur Verfügung. Ebenfalls dürften die Kosten günstiger sein, als die bei Durchführung von Aufbereitungsverfahren zur Wiedergewinnung von Abrasivmittel entstehenden Kosten. Insbesondere werden eben technisch diese Aufbereitungsverfahren eingespart und nicht mehr benötigt.

Durch Siebung, Klassierung mittels Hydrozyklon oder anderer Klassieraggregate kann das titanhaltige Abrasivmittel auf eine mittlere Teilchengröße von weniger als 50 Mikroometer, bevorzugt auf weniger als 15 Mikrometer, besonders bevorzugt auf weniger als 10 Mikrometer, gebracht werden (jeweils d₉₀-Werte), was die Erfindung ebenfalls vorsieht.

Abhängig von den Anforderungen können auch verschieden feinteilige Fraktionen des titanhaltigen Abrasivmittels gebildet werden.

Da die Verwendung eines pulver- oder granulatförmigen Abrasivmittels sowohl geringere Transportkosten verursacht als auch mit denselben Vorrichtungen eingesetzt werden kann wie die herkömmlich verwendeten pulverförmigen Materialien, kann das Aufschlussrückstandsprodukt vor Zuführung zum Schleifen oder Polieren getrocknet werden. Bevorzugt erfolgt die Trocknung mittels Sprühtrocknung oder Spinflashtrocknung, da auf diese Weise regelmäßig geformte, in etwa gleich große und stabile Granulate erhalten werden.

Es ist auch möglich, das Abrasivmittel zur Optimierung seines Abrasivverhaltens mit herkömmlichen Abrasivmitteln für das Polieren von Glas oder Metallen zu mischen. Der Vorteil einer solchen Mischung kann im Erreichen einer größeren Variationsbreite beim Optimieren des Gesamtsystems bestehen.

Die vorstehende Aufgabe wird erfindungsgemäß auch gelöst durch ein titanhaltiges Abrasivmittel bestehend aus oder enthaltend Zwischen- oder Nebenprodukte aus der Titandioxidproduktion, insbesondere Aufschlussrückstand, welcher bei der Herstellung von Titandioxid nach dem Sulfatverfahren anfällt, **dadurch gekennzeichnet, dass** das Abrasivmaterial 0,5 bis 20 Gew.%, insbesondere 3 bis 8 Gew.% an anorganischen Salzen, insbesondere Alkalisulfat, bezogen auf den wasserunlöslichen Feststoffanteil enthält und in getrockneter Form vorliegt.

Ein solches Abrasivmittel ist ebenfalls kostengünstig herstellbar, geeignet als Abrasivmittel zur Verwendung beim Polieren oder Schleifen von Werkstoffen oder Werkstücken und kann ferner problemlos umweltgerecht in einem Schmelzofen, insbesondere einem Hochofen, zusammen beispielsweise im Gemisch mit weiterem beim Polieren anfallenden Rückstandsmaterial entsorgt werden.

In Ausgestaltung ist vorgesehen, dass das Abrasivmaterial in Form eines Granulats mit einer mittleren Granulat-Partikelgröße von 10 bis 600 µm, vorzugsweise 30 bis 400 µm, insbesondere 50 bis 300 µm, vorliegt.

Weiterhin sieht die Erfindung titanhaltiges Abrasivmaterial bestehend aus oder enthaltend Zwischen- oder Nebenprodukte aus der Titandioxidproduktion, insbesondere Aufschlussrückstand, welcher bei der Herstellung von Titandioxid nach dem Sulfatverfahren anfällt, insbesondere nach Anspruch 13 oder 14, vor, welches sich dadurch auszeichnet, dass das titanhaltige Abrasivmaterial als wässrige Suspension vorliegt und 0,1 bis 10 Gew.-%, bevorzugt 0,5 bis 3,5 Gew.-% an einem organischen Dispergierhilfsmittel, bezogen auf den wasserunlöslichen Feststoff, zur Stabilisierung dieser Suspension enthält.

Hierbei ist es weiterhin von Vorteil, wenn das als wässrige Suspension vorliegende Abrasivmaterial einen Feststoffgehalt von 60 bis 70 Gew.-% aufweist, was die Erfindung ebenfalls vorsieht.

Das titanhaltige Abrasivmaterial zeichnet sich weiterhin dadurch aus, dass es eine Primärpartikelgröße mit einem d₉₀-Wert von weniger als 50 Mikrometer, bevorzugt weniger als 15 Mikrometer, besonders bevorzugt weniger als 10 Mikrometer, aufweist.

Gemäß Weiterbildung der Erfindung zeichnet sich auch das titanhaltige Abrasivmaterial dadurch aus, dass es als organisches Additiv ein Polyacrylat enthält.

Schließlich wird die oben stehende Aufgabe erfindungsgemäß auch gelöst durch die Verwendung von Zwischen- oder Nebenprodukten aus der Titandioxidproduktion, insbesondere des bei der Herstellung von Titandioxid nach dem Sulfatverfahren anfallenden Aufschlussrückstands, gegebenenfalls in Mischung oder zusammen mit anderen Abrasivmitteln, als Abrasivmittel zum Polieren oder Schleifen von Werkstoffen, bevorzugt von Glas oder Metallen, insbesondere von Stahl.

Hierbei sieht die Erfindung in Ausgestaltung vor, dass ein nach einem der Ansprüche 8 bis 12 herstellbares Produkt verwendet wird.

## Patentansprüche

1. Verfahren zum Polieren oder Schleifen von Werkstoffen oder Werkstücken mit Hilfe eines Abrasivmaterials, **dadurch gekennzeichnet, dass** das Abrasivmaterial ein titanhaltiges Abrasivmittel enthält, welches bei der Titandioxidherstellung nach dem Sulfatverfahren als Zwischen- oder Nebenprodukt anfällt.

2. Verfahren nach Anspruch 1, **dadurch gekennzeichnet, dass** das titanhaltige Abrasivmittel gemahlenen Ilmenit oder gemahlene Titanschlacke enthält.

3. Verfahren nach Anspruch 1, **dadurch gekennzeichnet, dass** das Abrasivmittel Aufschlussrückstand, der bei der Herstellung von Titandioxid nach dem Sulfatverfahren als unlöslicher Rückstand anfällt und aus der sogenannten Schwarzlösung abgetrennt wird, enthält.

4. Verfahren nach einem oder mehreren der vorstehenden Ansprüche, **dadurch gekennzeichnet, dass** das Abrasivmittel zu mehr als 5 Gew.-%, bevorzugt zu mehr als 50 Gew.-%, besonders bevorzugt zu mehr als 90 Gew.-%, aus Aufschlussrückstand aus der Titandioxidherstellung besteht.

5. Verfahren nach einem oder mehreren der vorstehenden Ansprüche, **dadurch gekennzeichnet, dass** das Abrasivmittel eine mittlere Teilchengröße von 1 bis 60 Mikrometern, bevorzugt von 5 bis 40 Mikrometern, aufweist.

6. Verfahren nach einem oder mehreren der vorstehenden Ansprüche, **dadurch gekennzeichnet, dass** das Abrasivmittel eine BET-Oberfläche von 1 bis 35 m²/g, bevorzugt von 5 bis 20 m²/g, aufweist.

7. Verfahren nach einem oder mehreren der vorstehenden Ansprüche, **dadurch gekennzeichnet, dass** der zu polierende Werkstoff Glas oder Metall, insbesondere Stahl, ist.

8. Verfahren zur Herstellung eines titanhaltigen Abrasivmittels, **dadurch gekennzeichnet, dass** eine Neutralisation oder Teilneutralisation des sauren Aufschlussrückstandes, der bei der Herstellung von Titandioxid nach dem Sulfatverfahren anfällt, mit alkalischen Verbindungen, besonders bevorzugt mit Natronlauge, vorgenommen wird und dass dieser neutralisierte Aufschlussrückstand, bevorzugt durch Sprühtrocknung oder Spinflashtrocknung, zu granularem Abrasivmaterial mit einer mittleren Granulat-Partikelgröße von 10 bis 600 µm, vorzugsweise 30 bis 400 µm, insbesondere 50 bis 300 µm, verarbeitet wird.

9. Verfahren zur Herstellung eines titanhaltigen Abrasivmittels, insbesondere nach Anspruch 8, **dadurch gekennzeichnet, dass** das titanhaltige Abrasivmittel in eine wässrige Suspension überführt wird und diese Suspension mit Hilfe eines organischen Additivs, bevorzugt eines Polyacrylates, stabilisiert wird.

10. Verfahren nach Anspruch 9, **dadurch gekennzeichnet, dass** 0,01 Gew,-% bis 1.0 Gew.-%, bevorzugt 0,5 Gew.-% bis 4 Gew.-%, an organischen Additiven bezogen auf den wasserunlöslichen Feststoff zugegeben werden.

11. Verfahren zum Polieren oder Schleifen von Werkstoffen mit Hilfe eines Abrasivmaterials oder zur Herstellung eines titanhaltigen Abrasivmittels, insbesondere nach einem der vorhergehenden Ansprüche, **dadurch gekennzeichnet, dass** das Abrasivmaterial nach dem Polieren oder Schleifen aufgefangen und gegebenenfalls zusammen mit anderen Rückständen des Polierens oder Schleifens einer Verwertung in einem Schmelzofen, insbesondere einem Hochofen, zugeführt wird, wobei gegebenenfalls zuvor eine Aufbereitung in Form einer Klassierung und/oder Trocknung vorgenommen wird.

12. Verfahren nach einem oder mehreren der vorstehenden Ansprüche, **dadurch gekennzeichnet, dass** das titanhaltige Abrasivmittel durch Siebung, Klassierung mittels Hydrozyklon oder anderer Klassieraggregate auf eine mittlere Teilchengröße von weniger als 50 Mikroometer, bevorzugt auf weniger als 15 Mikrometer, besonders bevorzugt auf weniger als 10 Mikrometer, gebracht wird.

13. Titanhaltiges Abrasivmaterial bestehend aus oder enthaltend Zwischen- oder Nebenprodukte aus der Titandioxidproduktion, insbesondere Aufschlussrückstand, welcher bei der Herstellung von Titandioxid nach dem Sulfatverfahren anfällt, **dadurch gekennzeichnet, dass** das Abrasivmaterial 0,5 bis 20 Gew.%, insbesondere 3 bis 8 Gew.% an anorganischen Salzen, insbesondere Alkalisulfat, bezogen auf den wasserunlöslichen Feststoffanteil enthält und in getrockneter Form vorliegt.

14. Titanhaltiges Abrasivmaterial nach Anspruch 13, **dadurch gekennzeichnet, dass** das Abrasivmaterial in Form eines Granulats mit einer mittleren Granulat-Partikelgröße von 10 bis 600 µm, vorzugsweise 30 bis 400 µm, insbesondere 50 bis 300 µm, vorliegt.

15. Titanhaltiges Abrasivmaterial bestehend aus oder enthaltend Zwischen- oder Nebenprodukte aus der Titandioxidproduktion, insbesondere Aufschlussrückstand, welcher bei der Herstellung von Titandioxid nach dem Sulfatverfahren anfällt, insbesondere nach Anspruch 13 oder 14, **dadurch gekennzeichnet, dass** das titanhaltige Abrasivmaterial als wässrige Suspension vorliegt und 0,1 bis 10 Gew.-%, bevorzugt 0,5 bis 3,5 Gew.-% an einem organischen Dispergierhilfsmittel, bezogen auf den wasserunlöslichen Feststoff, zur Stabilisierung dieser Suspension enthält.

16. Titanhaltiges Abrasivmaterial nach einem oder mehreren der Ansprüche 13 bis 15, **dadurch gekennzeichnet, dass** es als wässrige Suspension einen Feststoffgehalt von 60 bis 75 Gew-% aufweist.

17. Titanhaltiges Abrasivmaterial nach einem oder mehreren der vorstehenden Ansprüche, **dadurch gekennzeichnet, dass** es eine Primärpartikelgröße mit einem d₉₀-Wert von weniger als 50 Mikrometer, bevorzugt weniger als 15 Mikrometer, besonders bevorzugt weniger als 10 Mikrometer, aufweist.

18. Titanhaltiges Abrasivmaterial nach einem oder mehreren der vorstehenden Ansprüche, **dadurch gekennzeichnet, dass** es als organisches Additiv ein Polyacrylat enthält.

19. Verwendung von Zwischen- oder Nebenprodukten aus der Titandioxidproduktion, insbesondere des bei der Herstellung von Titandioxid nach dem Sulfatverfahren anfallenden Aufschlussrückstands, gegebenenfalls in Mischung oder zusammen mit anderen Abrasivmittel, als Abrasivmittel zum Polieren oder Schleifen von Werkstoffen, bevorzugt von Glas oder Metallen, insbesondere von Stahl.

20. Verwendung nach Anspruch 19, **dadurch gekennzeichnet, dass** ein nach einem der Ansprüche 8 bis 12 herstellbares Produkt verwendet wird.
